# FASCICULE DE BREVET EUROPEEN

(11) **EP 1 149 447 B1**
(45) Date de publication et mention de la délivrance du brevet: **09.03.2005**
(21) Numéro de dépôt: 99956150.9
(22) Date de dépôt: 25.11.1999
(51) Int. Cl.: H02G 3/10

(54) **SUPPORT D'APPAREILLAGE, NOTAMMENT POUR APPAREILLAGE ELECTRIQUE, ET BOITIER COMPORTANT UN TEL SUPPORT D'APPAREILLAGE**
GERÄTEGEHALTER ,INSBESONDERE FÜR ELEKTRISCHES GERÄT UND DAMIT AUSGERÜSTETES GEHÄUSE
APPARATUS SUPPORT, IN PARTICULAR FOR ELECTRICAL APPARATUS, AND BOX COMPRISING SUCH AN APPARATUS SUPPORT

(30) Priorité: 27.11.1998 FR 9814943
(43) Date de publication de la demande: 31.10.2001
(73) Titulaire: LEGRAND, 87000 Limoges (FR); LEGRAND SNC, 87000 Limoges (FR)
(72) Inventeur: JARRY, Patrice, F-72140 Mont Saint Jean (FR); DECORE, Rapha[l, F-72140 Parennes (FR)
(74) Mandataire: Santarelli
(86) Numéro de dépôt international: PCT/FR1999/002917
(87) Numéro de publication internationale: WO 2000/033436

(56) Documents cités:
- EP-A- 0 600 109
- WO-A-96/24183
- FR-A- 2 698 738

## Description

La présente invention concerne d'une manières générale les supports d'appareillage du type de ceux mis en oeuvre pour la fixation d'un quelconque appareillage, ou, plus exactement, pour la fixation de son mécanisme.

Elle vise plus particulièrement le cas, où, s'agissant d'appareillages électriques, cette fixation se fait en liaison avec la mise en oeuvre d'une goulotte propre au passage des câbles ou conducteurs électriques nécessaires à la desserte de ces appareillages.

Ainsi qu'on le sait, une goulotte comporte, globalement, d'une part, un socle, dont la section transversale est ouverte, et, d'autre part, un couvercle, qui, pour la fermeture de l'ensemble, est adapté à être rapporté sur le socle.

Plusieurs modes de fixation peuvent être envisagés par rapport à une telle goulotte.

Tout d'abord, cette fixation peut intervenir au sein même de la goulotte, ou, plus exactement, au sein de son socle.

Cela est plus particulièrement envisageable lorsque ce socle comporte, suivant une section transversale en forme générale de U, une partie médiane et deux ailes latérales, avec, le long du bord libre de ces ailes latérales, des retours, qui sont dirigés l'un vers l'autre, et à la faveur desquels le couvercle est en pratique rapporté par encliquetage.

Il suffit, alors, en effet, de mettre en oeuvre un support d'appareillage spécifique doté latéralement de moyens de rainure permettant de l'engager sur les retours d'un tel socle, entre deux tronçons du couvercle.

Un support d'appareillage reprenant une disposition de ce type se trouve notamment décrit dans le brevet français qui, déposé le 1er décembre 1992, sous le No 92 14441, a été publié sous le No 2 698 738.

En variante, la fixation d'un mécanisme d'appareillage peut se faire au sein d'un boîtier, ce boîtier étant lui-même implanté soit sur la goulotte, ou, plus exactement, sur le socle de cette goulotte, entre deux tronçons de couvercle, soit le long de cette goulotte, en étant alors raccordé à celle-ci par un auvent qui coiffe transversalement le socle de la goulotte pour le passage des câbles ou conducteurs électriques concernés, soit à distance de la goulotte, en étant alors raccordé à celle-ci par une goulotte dérivée assurant elle-même le passage de ces câbles ou conducteurs électriques.

Ce boîtier peut également être utilisé seul, sans goulotte, par exemple à l'extrémité d'un conduit encastré.

A cet effet, on connaît du document WO 96/24183 un boîtier pour appareillage électrique, comprenant trois parties dont une plaque de base, un support d'appareillage et une plaque de façade.

Le support d'appareillage de ce boîtier se présente sous la forme d'une boîte rectangulaire formant capot du boîtier et comportant des parois latérales présentant une certaine flexibilité sur la face interne desquelles il est prévu des nervures comportant, à leur extrémité, des surfaces de butée destinées à s'engager dans les rainures définies dans des colonnes portées en saillie par la plaque de base sur laquelle est monté ledit support.

A chaque fois, des dispositions spécifiques sont mises en oeuvre pour la fixation du mécanisme d'appareillage au sein d'un tel boîtier, avec, ou non, l'individualisation d'un support d'appareillage particulier.

La présente invention a d'une manière générale pour objet une disposition permettant avantageusement de se satisfaire d'un même support d'appareillage dans tous les cas de fixation envisageables, au bénéfice d'une standardisation des fabrications correspondantes, et, donc, au bénéfice des coûts.

De manière plus précise, elle a tout d'abord pour objet un dispositif de fixation d'un appareillage, tel que défini dans la revendication 1 ; elle a encore pour objet tout boîtier au sein duquel est susceptible d'intervenir un tel dispositif de fixation.

Grâce à la platine associée au support d'appareillage suivant l'invention, la fixation d'un mécanisme d'appareillage peut indifféremment intervenir sur une goulotte, le long d'une goulotte, à distance de celle-ci, ou sans goulotte, en mettant en oeuvre, à chaque fois, le même support d'appareillage, et en se faisant, de manière usuelle, à chaque fois, au sein d'un boîtier approprié.

Le dispositif de fixation suivant l'invention peut déjà, ainsi, satisfaire, avantageusement, par lui-même, avec une grande souplesse, aux diverses conditions d'installation correspondantes.

Il est aussi possible de considérer que la platine associée suivant l'invention à ce support d'appareillage accroît le champ d'application des supports d'appareillage comportant latéralement de tels moyens de rainure, en permettant de les mettre en place au sein d'un boîtier.

Quoi qu'il en soit, le dispositif de fixation suivant l'invention peut ainsi avantageusement répondre de manière quasi universelle à tous les modes de fixation usuellement pratiqués.

Certes, il est décrit, dans la demande de brevet britannique No 2 187 900, un boîtier auquel il est associé, à titre d'accessoire de pose, une platine présentant en saillie des colonnes propres à son encliquetage.

Mais ce boîtier ne constitue pas un support d'appareillage au sens de la présente invention.

En particulier, il ne saurait intervenir au sein d'un autre boîtier ni comporter latéralement de quelconques moyens de rainure.

En outre, les colonnes de la platine qui lui est associée se réduisent à de simples pattes d'encliquetage.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un boîtier au sein duquel intervient un support d'appareillage suivant l'invention;
la figure 2 est une vue en perspective éclatée de ce boîtier et de ce support d'appareillage ;
la figure 3 est, à échelle supérieure, une vue en perspective de ce seul support d'appareillage, représenté isolément;
la figure 4 est une vue en coupe transversale de ce support d'appareillage, suivant la ligne IV-IV de la figure 3 ;
la figure 5 est une vue en coupe transversale de la platine qui lui est associée suivant l'invention, suivant la ligne V-V de la figure 2 ;
la figure 6 est une vue en coupe, qui, déduite de celles des figures 4 et 5, illustre l'ensemble monté ;
la figure 7 est une vue en perspective éclatée, qui, analogue à celle de la figure 2, se rapporte à un autre boîtier ;
de même, les figures 8 et 9 sont des vues en perspectives qui, analogues à celle de la figure 2, mais sans la totalité des constituants concernés, se rapportent chacune respectivement à un autre boîtier.

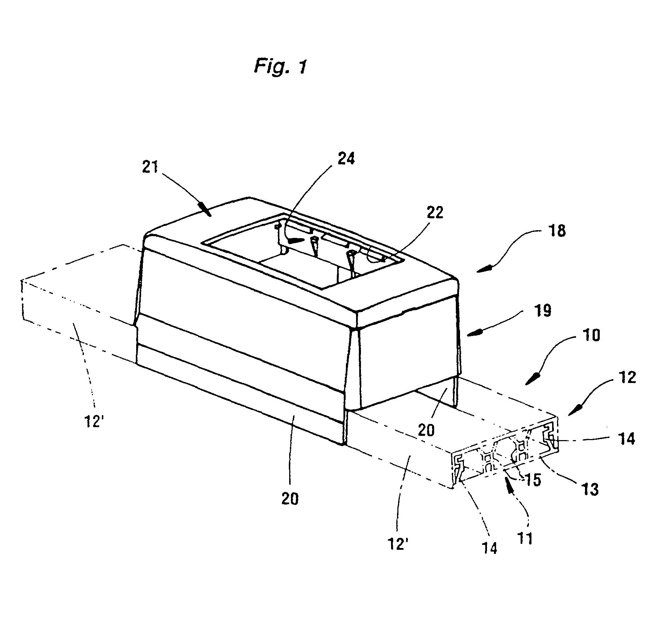

Les figures 1 à 7 illustrent, à titre d'exemple, l'application de l'invention au cas où le mécanisme d'appareillage, non représenté, à fixer, doit être implanté en saillie sur une goulotte 10.

Cette goulotte 10 ne relevant pas, par elle-même, de la présente invention, elle ne sera pas décrite dans tous ses détails ici.

Globalement, cette goulotte 10 comporte, d'une part, un socle 11, par lequel elle est adaptée à être rapportée sur une quelconque paroi non représentée, et dont la section transversale est ouverte, et, d'autre part, un couvercle 12, qui, pour refermer l'ensemble, est adapté à être rapporté sur le socle 11, par exemple par encliquetage, tel que représenté.

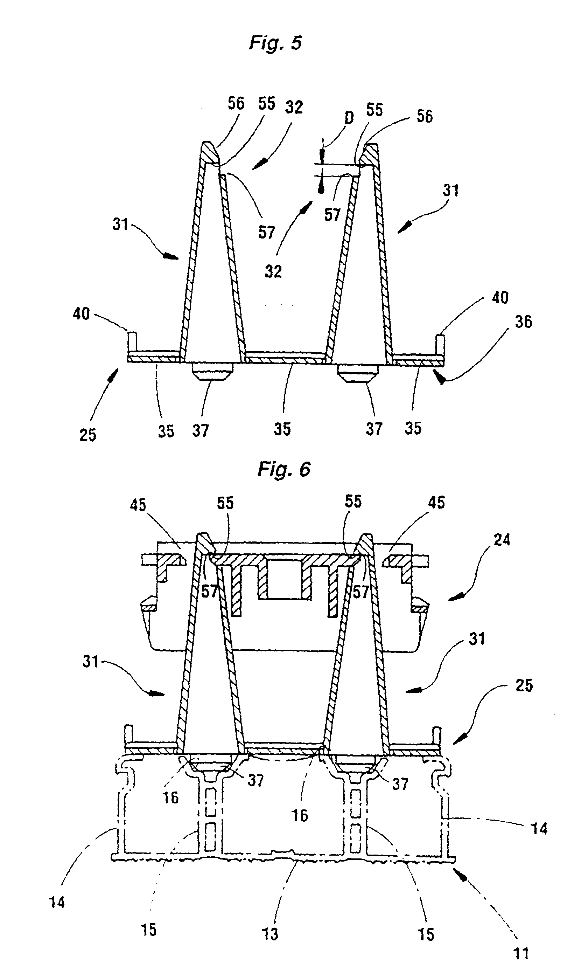

Dans la forme de réalisation plus particulièrement représentée sur les figures 1 et 6, et tel que schématisé en traits interrompus sur celles-ci, le socle 11 a, en section transversale, un profil en U, avec une partie médiane 13 et deux ailes latérales 14, et il comporte, intérieurement, à distance l'une de l'autre, deux cloisons 15, qui courent longitudinalement sur toute sa longueur, parallèlement aux ailes latérales 14, et qui, dans cette forme de réalisation, forment chacune une gouttière 16 le long de leur bord libre et sont chacune plus ou moins évidées.

Corollairement, dans cette forme de réalisation, le couvercle 12 a, lui-même, en section transversale, un profil en U, et il coiffe le socle 11 sur toute la hauteur de celui-ci.

De manière connue en soi, la fixation, sur une telle goulotte 10, du mécanisme d'appareillage concerné se fait, dans ce cas, au sein d'un boîtier 18 lui-même adapté à être rapporté, en saillie, sur le socle 11, entre deux tronçons 12' du couvercle 12.

De manière connue en soi, enfin, ce boîtier 18 comporte, extérieurement, d'une part, un cache 19, en forme de cadre, qui, par des bords tombés 20, est adapté à s'engager sur le socle 11, en coiffant localement celui-ci, et, d'autre part, une plaque de façade 21, qui recouvre le cache 19, et qui, pour le passage de la partie du mécanisme d'appareillage concerné laissée accessible à l'usager, présente, dans sa zone centrale, un évidement 22, en formant ainsi un enjoliveur autour de la partie en question de ce mécanisme d'appareillage.

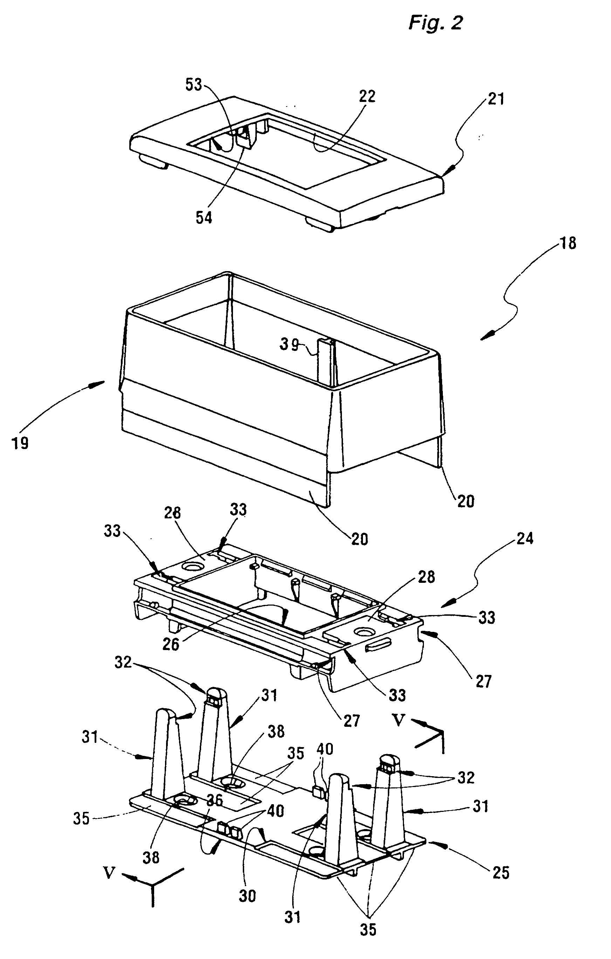

Suivant l'invention, il est mis en oeuvre, dans le boîtier 19, et ainsi qu'il est mieux visible sur la figure 2, un support d'appareillage 24, qui est destiné à recevoir directement le mécanisme d'appareillage à fixer, et auquel il est associé, à titre d'accessoire de pose, une platine 25.

Dans la forme de réalisation représentée, le support d'appareillage 24 se présente sous la forme générale d'une plaquette globalement parallélépipédique ajourée d'un évidement 26 dans sa zone centrale.

Ce support d'appareillage 24 relève, globalement, de dispositions connues.

En particulier, il comporte, sur chacun de deux côtés opposés, au moins, des moyens de rainure 27 propres à permettre de les engager sur les retours du socle 11 d'une goulotte 12 lorsqu'un tel socle 11 présente de tels retours le long du bord libre de ses ailes latérales 14, suivant une disposition du type de celle dont il est fait état dans le brevet français publié sous le No 2 698 738 et déjà mentionné ci-dessus.

Le support d'appareillage 24 ne sera donc pas décrit dans tous ses détails ici.

Seuls en seront décrits les éléments nécessaires à la compréhension de l'invention.

Dans la forme de réalisation représentée, l'évidement 26 de ce support d'appareillage 24 ne s'étend, en longueur, que sur une fraction de la longueur de ce support d'appareillage 24, en laissant disponible une banquette 28 à chacune de ses extrémités transversales.

Corollairement, dans cette forme de réalisation, les moyens de rainure 27 s'étendent le long des côtés longitudinaux du support d'appareillage 24, et seulement le long de ces côtés longitudinaux.

Suivant l'invention, la platine 25 associée au support d'appareillage 24 présente, en saillie, sur sa surface supérieure 30, au moins deux colonnes 31, avec, à la partie sommitale de chacune de ces colonnes 31, et suivant des modalités décrites plus en détail ultérieurement, des moyens d'encliquetage 32, et, conjointement, le support d'appareillage 24 comporte, lui aussi, en correspondance, et suivant des modalités également décrites plus en détail ultérieurement, des moyens d'encliquetage 33, qui sont complémentaires des moyens d'encliquetage 32 des colonnes 31 de la platine 25, et par lesquels il est ainsi apte à être assujetti à celle-ci.

Dans la forme de réalisation représentée, la platine 25 est relativement plate et mince, et son contour est globalement rectangulaire.

En outre, dans cette forme de réalisation, elle présente, parallèlement les unes aux autres, le long de chacun de ses côtés transversaux, trois portions de moindre épaisseur 35, à raison d'une dans chacune des zones d'angle et d'une entre celles-ci.

Susceptibles d'être découpées, ces portions de moindre épaisseur 35 permettent, si désiré, le passage de câbles ou de conducteurs électriques.

Dans la forme de réalisation représentée, la platine 25 présente, en saillie sur sa surface inférieure 36, quatre bossages 37, qui interviennent au sommet d'un rectangle, entre les portions de moindre épaisseur 35, pour son emboîtement sur les cloisons 15 du socle 11 à la faveur de la gouttière 16 formée par celles-ci, et qui sont chacun ajourés d'un perçage 38, pour le passage d'un quelconque organe de fixation, non représenté, cet organe de fixation traversant le socle 11 à la faveur des évidements de la cloison 15 correspondante, et venant ensuite s'ancrer dans la paroi sous-jacente.

Dans la forme de réalisation représentée, la platine 25 présente, en outre, en saillie sur sa surface supérieure 30, dans la zone médiane de chacun de ses côtés longitudinaux, le long du bord libre de ceux-ci, deux nervures 40, pour le calage du cache 19.

Enfin, dans la forme de réalisation représentée, la platine 25 porte, en saillie sur sa surface supérieure 30, quatre colonnes 31, qui interviennent au sommet d'un rectangle, au voisinage de ses côtés transversaux, entre les portions de moindre épaisseur 35 présentes le long de ceux-ci.

En pratique, ces colonnes 31 sont toutes identiques entre elles, et les moyens d'encliquetage 32 qu'elles comportent interviennent tous à un même niveau.

En pratique, également, pour chacune des deux colonnes 31 qui interviennent au voisinage d'un même côté transversal de la platine 25, ces moyens d'encliquetage 32 se font face de l'une de ces colonnes 31 à l'autre.

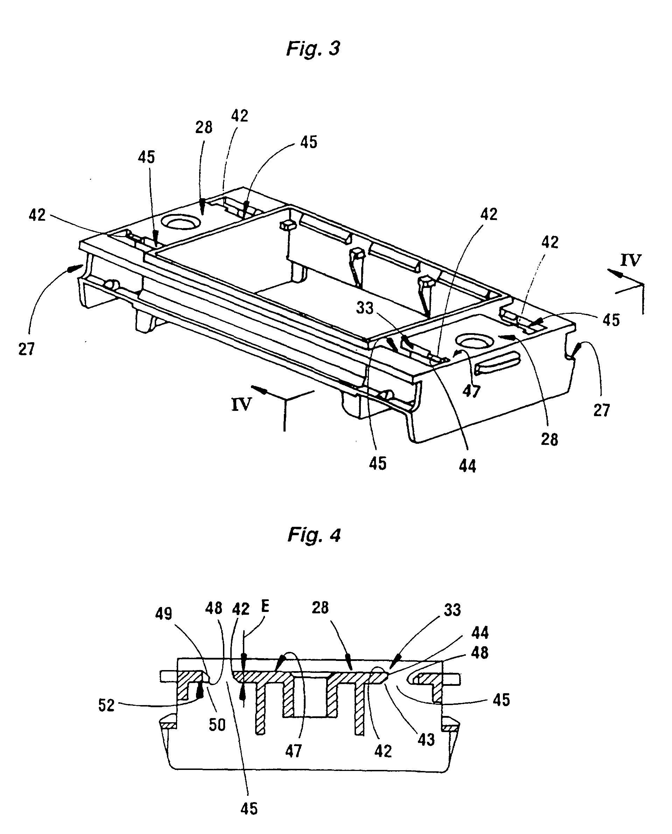

Pour chacune des colonnes 31 de la platine 25 qui lui est associée, les moyens d'encliquetage 33 que comporte le support d'appareillage 24 sont constitués par un simple cran 42, qui, préférentiellement, et tel que représenté, figure 4, est précédé par un chanfrein d'engagement 43, et qui, en pratique, s'étend parallèlement aux côtés longitudinaux de ce support d'appareillage 24.

Dans la forme de réalisation représentée, le cran 42 intervient au bout d'une languette 44.

Plus précisément, dans cette forme de réalisation, le support d'appareillage 24 comporte, pour chacune des colonnes 31 de la platine 25, une ouverture 45, par laquelle il est apte à s'engager sur une telle colonne 31, et le cran 42 correspondant s'étend le long d'une partie au moins d'un des côtés de cette ouverture 45.

Mais, en variante, au lieu d'intervenir au bout d'une languette 44, le cran 42 pourrait tout aussi bien être formé directement par le bord de l'ouverture 45.

Dans la forme de réalisation représentée, l'ouverture 45 traverse de part en part le support d'appareillage 24.

Plus précisément, lorsque, comme en l'espèce, le support d'appareillage 24 comporte, au moins localement, à l'endroit concerné, une banquette 28, l'ouverture 45 affecte cette banquette 28, en traversant de part en part celle-ci.

Dans la forme de réalisation représentée, le support d'appareillage 24 comporte quatre ouvertures 45, à raison d'une par colonne 31 de la platine 25, et à raison de deux pour chacune de ses deux banquettes 28.

En pratique, de contour globalement rectangulaire, ces ouvertures 45 sont allongées parallèlement aux côtés longitudinaux du support d'appareillage 24.

Dans la forme de réalisation représentée, le cran 42 formant chacun des moyens d'encliquetage 32 que comporte ce support d'appareillage 24 est à niveau avec la surface supérieure 47 de ses banquettes 28, en étant directement formé par cette surface supérieure 47.

Lorsque, comme en l'espèce, il est associé, au support d'appareillage 24, du côté opposé à la platine 25, une plaque de façade 21, chacune des ouvertures 45 que comporte ce support d'appareillage 24 pour son engagement sur une colonne 31 de cette platine 25 est conjointement propre à participer à l'encliquetage de cette plaque de façade 21.

Plus précisément, pour l'encliquetage de la plaque de façade 21, un autre cran 48 s'étend sur une partie au moins du côté de chacune des ouvertures 45 opposé au côté le long duquel s'étend le cran 42 constituant les moyens d'encliquetage 33 correspondants.

Comme ce cran 42, le cran 48 est précédé par un chanfrein d'engagement 49, et il intervient au bout d'une languette 50.

Mais, à la différence du cran 42, le cran 48 est à niveau avec la surface inférieure 52 de la banquette 28 correspondante, en étant directement formé par cette surface inférieure 52.

En pratique, pour chacune des ouvertures 45, les languettes 44 et 50 sont décalées longitudinalement l'une par rapport à l'autre.

Corollairement, la plaque de façade 21 présente, en bordure de son évidement 22, le long des côtés transversaux de celui-ci, et en saillie sur sa surface inférieure 53, quatre pattes d'encliquetage 54, à raison d'une patte d'encliquetage 54 par ouverture 45 du support d'appareillage 24, et ces pattes d'encliquetage 54 sont chacune aptes à coopérer avec le cran 48 correspondant de ce support d'appareillage 24.

Dans la forme de réalisation représentée, les moyens d'encliquetage 32 de chacune des colonnes 31 de la platine 25 comportent également un cran 55 précédé par un chanfrein d'engagement 56, et ce cran 55 intervient en amont d'un épaulement 57 contre lequel le support d'appareillage 24 est apte à prendre appui par sa banquette 28 correspondante.

Soit E l'épaisseur des banquettes 28 du support d'appareillage 24.

En pratique, la distance D séparant le cran 55 des colonnes 31 de la platine 25 de l'épaulement 57 associé à ce cran 55 est sensiblement égale à l'épaisseur E des banquettes 28 du support d'appareillage 24 tout en étant légèrement supérieure à cette épaisseur E.

Tout en étant relativement rigides, les colonnes 31 de la platine 25 sont chacune suffisamment élastiquement déformables pour permettre effectivement l'encliquetage du support d'appareillage 24 sur elles.

Dans la forme de réalisation représentée, ces colonnes 31 sont chacune isolées les unes des autres, et, parallèlement aux côtés transversaux de la platine 25, elles ont, en élévation, un profil globalement trapézoïdal.

Mais, ne fût-ce que pour des raisons de moulage, elles sont évidées.

Au montage, il peut par exemple être procédé comme suit.

La platine 25 est d'abord rapportée sur le socle 11 de la goulotte 10, et, suivant les modalités décrites succinctement ci-dessus, elle est alors dûment assujettie à la paroi sous-jacente par des organes de fixation.

Le support d'appareillage 24 est ensuite rapporté sur les colonnes 31 de la platine 25, par encliquetage sur celles-ci, après, ou avant, d'avoir reçu le mécanisme d'appareillage à fixer, et après, ou avant, le câblage de ce dernier.

Le cache 19 est ensuite mis en place autour de l'ensemble, par engagement sur le support d'appareillage 24, sur la platine 25, et sur le socle 11 de la goulotte 10, et, pour finir, la plaque de façade 21 est encliquetée sur le support d'appareillage 24 à travers le cache 19, ce qui suffit au maintien de ce dernier.

Ainsi qu'on le notera, le cache 19 présente, en saillie sur sa surface intérieure, dans la zone médiane de chacun de ses côtés longitudinaux, une nervure 39, à profil en T, par laquelle il est apte à s'insérer entre les nervures 40 correspondantes de la platine 25.

Si désiré, le cache 19 peut également comporter, en saillie sur sa surface intérieure, des pattes, non représentées, par lesquelles il est apte à confirmer l'encliquetage intervenant entre le support d'appareillage 24 et la platine 25, en assurant ainsi une bonne tenue mécanique à l'ensemble lors d'éventuels chocs.

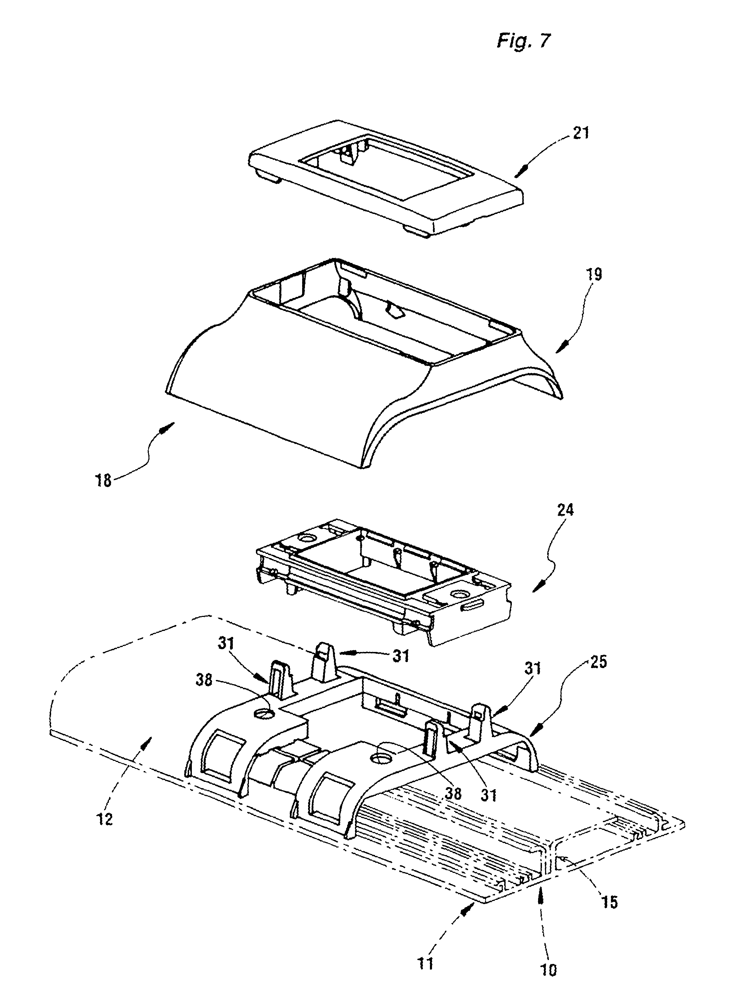

La figure 7 illustre l'application de l'invention au cas où le socle 11 de la goulotte 10 est dépourvu d'ailes latérales 14, le couvercle 12 de cette goulotte 10 recouvrant directement ce socle 11.

Dans un tel cas, la platine 25 associée suivant l'invention au support d'appareillage 24 est simplement conformée en conséquence, à la manière du couvercle 12, et il en est de même du cache 19.

En outre, elle ne comporte plus que deux perçages 38, au lieu de quatre, le socle 11 de la goulotte 10 ne comportant plus lui-même qu'une cloison 15 au lieu de deux.

Mais, pour le reste, les dispositions sont du même type que celles précédemment décrites.

En particulier, le support d'appareillage 24 reste avantageusement inchangé.

Seule est éventuellement modifiée la hauteur des colonnes 31 de la platine 25.

Par exemple, et tel que représenté, cette hauteur est réduite.

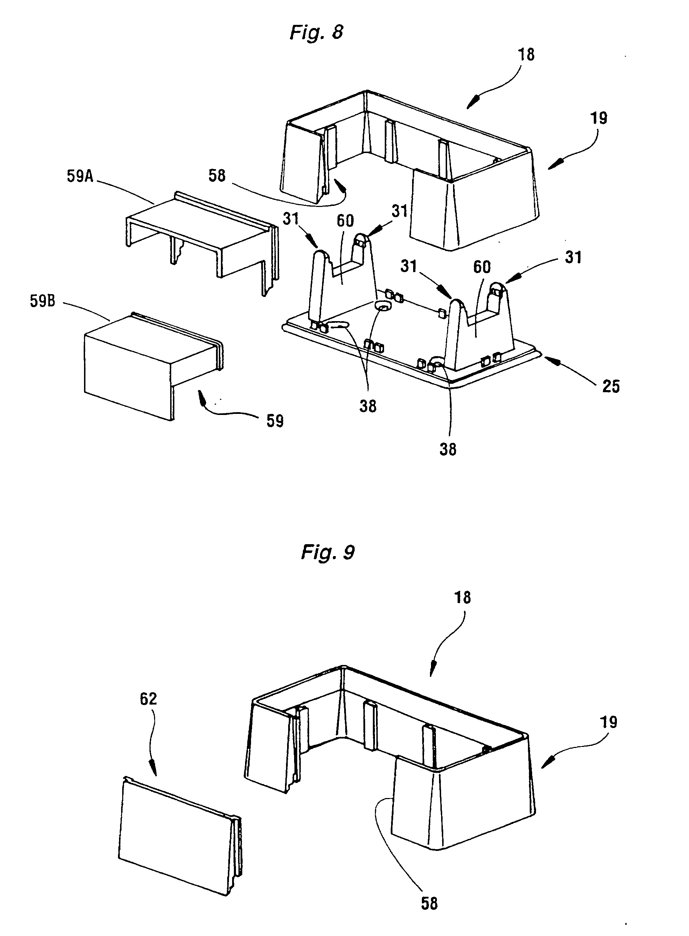

La figure 8 illustre l'application de l'invention au cas où, au lieu d'être implanté sur une goulotte 10, le boîtier 18 doit être implanté le long d'une telle goulotte 10, non représentée.

Dans ce cas, le cache 19 présente, sur celui de ses côtés longitudinaux par lequel il est adjacent à la goulotte 10, une ouverture 58 à la faveur de laquelle est mis en place un auvent 59 propre à s'étendre transversalement sur le socle 11 d'une telle goulotte 10.

Dans la forme de réalisation représentée, cet auvent 59 est distinct du cache 19, et il est en deux parties 59A, 59B.

Mais, en variante, et suivant des dispositions qui, bien connues par elles-mêmes, ne seront pas décrites plus en détail ici, il peut tout aussi bien être d'un seul tenant avec le cache 19 et/ou être en une seule partie.

Pour le reste, les dispositions sont du même type que celles précédemment décrites.

Cependant, devant être directement fixée à la paroi sous-jacente, la platine 25 est relativement plus épaisse que précédemment.

En outre, dans la forme de réalisation représentée, les colonnes 31 de cette platine 25 sont reliées entre elles par paire par une cloison 60 sur une fraction au moins de leur hauteur à compter de cette platine 25.

Dans la forme de réalisation représentée, les cloisons 60 ainsi mises en oeuvre s'étendent parallèlement aux côtés transversaux de la platine 25.

Elles renforcent la relative rigidité des colonnes 31.

La figure 9 illustre l'application de l'invention au cas où le boîtier 18 doit être implanté à distance de la goulotte 10 associée, également non représentée.

Dans un tel cas, il est substitué, à l'auvent 59 précédent, un opercule 62, qui, tout en venant occulter l'ouverture 58 du cache 19, est apte à pouvoir être découpé pour la pénétration dans celui-ci d'une quelconque goulotte dérivée, elle aussi non représentée.

En variante, le boîtier 18 peut, également, être mis en oeuvre en l'absence de toute goulotte.

Dans tous les cas, et ainsi qu'on l'aura noté, la platine 25 associée au support d'appareillage 24 suivant l'invention comporte des moyens d'assujettissement propres à sa fixation à un quelconque support.

Il s'agit, par exemple, des perçages 38 qu'elle peut présenter pour le passage d'organes de fixation propres à venir s'ancrer dans la paroi sous-jacente.

Mais, en variante, et/ou en complément, il peut s'agir, également, lorsqu'elle est implantée sur le socle 11 d'une goulotte 10, de moyens d'engagement propres à sa venue en prise avec ce socle 11, et, par exemple, de moyens d'encliquetage.

La présente invention ne se limite d'ailleurs pas aux formes de réalisation et/ou de mise en oeuvre décrites et représentées, mais englobe toute variante d'exécution et/ou de combinaison de celles-ci.

## Revendications

1. Dispositif de fixation d'un appareillage comprenant un support d'appareillage (24) auquel il est associé une platine (25) qui présente, en saillie, au moins deux colonnes (31), avec, à la partie sommitale de chacune de ces colonnes (31), des moyens d'encliquetage (32) pour l'assujettissement dudit support d'appareillage (24), **caractérisé en ce que** le support d'appareillage (24) se présente sous la forme générale d'une plaquette ajourée d'un évidement (26) dans sa zone centrale en laissant disponible une banquette (28) à chacune de ses extrémités transversales, et comportant, sur chacun de deux côtés opposés, des moyens de rainure (27) propres à son éventuelle mise en place sur des retours de socle de goulotte, ledit support d'appareillage (24) comprenant, pour chacune des colonnes (31) de la platine (25), une ouverture (45) affectant chaque banquette (28) et par laquelle il est apte à s'engager sur une telle colonne (31), chaque ouverture (45) étant pourvue de moyens d'encliquetage (33), qui sont complémentaires des moyens d'encliquetage (32) de chaque colonne (31) de la platine (25).

2. Dispositif de fixation suivant la revendication 1, **caractérisé en ce que** pour chacune des colonnes (31) de la platine (25), les moyens d'encliquetage (33) que le support d'appareillage comporte sont constitués par un simple cran (42).

3. Dispositif de fixation suivant la revendication 2, **caractérisé en ce que** le cran (42) est précédé par un chanfrein d'engagement (43).

4. Dispositif de fixation suivant l'une quelconque des revendications 2, 3, **caractérisé en ce que** le cran (42) intervient au bout d'une languette (44).

5. Dispositif de fixation suivant l'une quelconque des revendications 2 à 4, **caractérisé en ce que** le cran (42) s'étend le long d'une partie au moins d'un des côtés d'une ouverture (45).

6. Dispositif de fixation suivant l'une des revendications 1 à 5, **caractérisé en ce que** chaque ouverture (45) du support d'appareillage (24) le traverse de part en part.

7. Dispositif de fixation suivant l'une quelconque des revendications 1 à 6, **caractérisé en ce qu'**il comporte une plaque de façade (21) du côté opposé à la platine (25), et l'ouverture (45) que le support d'appareillage comporte est propre à participer à l'encliquetage de cette plaque de façade (21).

8. Dispositif de fixation suivant la revendication 7, **caractérisé en ce que**, pour l'encliquetage de la plaque de façade (21), le support d'appareillage (24) comporte un autre cran (48) qui s'étend sur une partie au moins du côté de l'ouverture (45) opposé au côté le long duquel s'étend le cran (42) constituant les moyens d'encliquetage (33).

9. Dispositif de fixation suivant l'une quelconque des revendications 1 à 8, **caractérisé en ce que** les moyens d'encliquetage (32) de chacune des colonnes (31) de la platine (25) comportent un cran (55), et celui-ci intervient en amont d'un épaulement (57) contre lequel le support d'appareillage (24) est apte à prendre appui.

10. Dispositif de fixation suivant la revendication 9, **caractérisé en ce que** la distance (D) séparant le cran (55) des colonnes (31) de la platine (25) de l'épaulement (57) associé à ce cran (55) est sensiblement égale à l'épaisseur (E) de chaque banquette (28) du support d'appareillage (24) tout en étant légèrement supérieure à cette épaisseur (E).

11. Dispositif de fixation suivant l'une quelconque des revendications 9, 10, **caractérisé en ce que** le cran (55) est précédé par un chanfrein d'engagement (56).

12. Dispositif de fixation suivant l'une quelconque des revendications 1 à 11. **caractérisé en ce que**, tout en étant relativement rigides, les colonnes (31) de la platine (25) sont chacune suffisamment élastiquement déformables pour permettre l'encliquetage du support d'appareillage (24) sur elles.

13. Dispositif de fixation suivant l'une quelconque des revendications 1 à 12, **caractérisé en ce que** la platine (25) porte en saillie quatre colonnes (31).

14. Dispositif de fixation suivant la revendication 13, **caractérisé en ce que** les colonnes (31) de la platine (25) sont reliées entre elles par paire par une cloison (60) sur une fraction de leur hauteur à compter de cette platine (25).

15. Dispositif de fixation suivant l'une quelconque des revendications 1 à 14, **caractérisé en ce que** la platine (25) est un accessoire de pose comportant des moyens d'assujettissement propres à sa fixation à un quelconque support.

16. Boîtier, **caractérisé en ce qu'**intervient en son sein un dispositif de fixation suivant l'une quelconque des revendications 1 à 15.

## Claims

1. A device for fixing an appliance, comprising an appliance support (24) associated with a platen (25) from which at least two columns (31) project, the top portion of each of said columns (31) having snap-fit means (32) to secure said appliance support (24), **characterized in that** the appliance support (24) is in the general form of a plate perforated by a hole (26) in its central zone leaving a ledge (28) at each of its transverse ends and comprising on each of two opposite sides, groove means (27) for positioning it on returns of a cable trunking base, said appliance support (24) comprising, for each of the columns (31) of the platen (25), an opening (45) located in each ledge (28) and via which it can engage on a said column (31), each opening (45) being provided with snap-fit means (33) which are complementary to the snap-fit means (32) of each column (31) of the platen (25).

2. A fixing device according to claim 1, **characterized in that** for each of the columns (31) of the platen (25), the snap-fit means (33) comprised on the appliance support are constituted by a simple notch (42).

3. A fixing device according to claim 2, **characterized in that** the notch (42) is preceded by a guide chamfer (43).

4. A fixing appliance according to claim 2 or claim 3, **characterized in that** the notch (42) is located at the end of a tongue (44).

5. A fixing device according to any one of claims 2 to 4, **characterized in that** the notch (42) extends along at least a portion of one of the sides of an opening (45).

6. A fixing device according to one of claims 1 to 5, **characterized in that** each opening (45) of the appliance support (24) passes completely through it.

7. A fixing device according to any one of claims 1 to 6, **characterized in that** it comprises a face plate (21) on the side opposite to the platen (25), and the opening (45) comprised in the appliance support can participate in snap fitting of said facing plate (21).

8. A fixing device according to claim 7, **characterized in that**, in order to snap-fit the facing plate (21), the appliance support (24) comprises a further notch (48) which extends over at least a portion of the side of the opening (45) opposite to the side along which the notch (42) constituting the snap-fit means (33) extends.

9. A fixing device according to any one of claims 1 to 8, **characterized in that** the snap-fit means (32) of each of the columns (31) of the platen (25) comprise a notch (55) which is upstream of a shoulder (57) against which the appliance support (24) can bear.

10. A fixing device according to claim 9, **characterized in that** the distance (D) separating the notch (55) from the columns (31) of the platen (25) from the shoulder (57) associated with said notch (55) is substantially equal to the thickness (E) of each ledge (28) of the appliance support (24), being slightly larger than said thickness (E).

11. A fixing device according to claim 9 or claim 10, **characterized in that** the notch (55) is preceded by a guide chamfer (56).

12. A fixing device according to any one of claims 1 to 11, **characterized in that**, although relatively rigid, the columns (31) of the platen (25) are each sufficiently elastically deformable to allow snap-fitting of the appliance support (24) thereon.

13. A fixing device according to any one of claims 1 to 12, **characterized in that** the platen (25) carries four projecting columns (31).

14. A fixing device according to claim 13, **characterized in that** the columns (31) of the platen (25) are connected together in twos via a partition (60) over a fraction of their height starting from said platen (25).

15. A fixing device according to any one of claims 1 to 14, **characterized in that** the platen (25) is an installation accessory comprising affixing means for fixing it to any support.

16. A casing, **characterized in that** it forms part of a fixing device according to any one of claims 1 to 15.

## Patentansprüche

1. Befestigungselement für ein Gerät, welches einen Geräteträger (24) umfasst, an dem eine Platte (25) befestigt ist, welche wenigstens zwei vorstehende Säulen (31) aufweist, mit Verrastmitteln (32) im Gipfelbereich jeder dieser Säulen (31) zur Befestigung des Geräteträgers (24),
**dadurch gekennzeichnet,**
**dass** der Geräteträger (24) die allgemeine Form eines Plättchens besitzt, das in seinem zentralen Bereich von einer Aussparung (26) durchbrochen ist, wobei an jeder seiner Querseiten ein Randstreifen (28) stehen bleibt, und welches, auf jeder der beiden gegenüberliegenden Seiten, Rillenmittel (27) für seine eventuelle Montage auf Befestigungsschienen eines Kabelkanalsockels aufweist, wobei der Geräteträger (24) für jede der Säulen (31) der Platte (25) eine jedem Randstreifen (28) zugeordnete Öffnung (45) aufweist, mittels derer er auf eine solche Säule (31) aufgesetzt werden kann, wobei jede Öffnung (45) mit Verrastmitteln (33) versehen ist, die zu den Verrastmitteln (32) jeder Säule (31) der Platte (25) komplementär sind.

2. Befestigungselement nach Anspruch 1, **dadurch gekennzeichnet, dass** die Verrastmittel (33) für jede der Säulen (31) der Platte (25), die der Geräteträger aufweist, von einer einfachen Raste (42) gebildet sind.

3. Befestigungselement nach Anspruch 2, **dadurch gekennzeichnet, dass** vor der Raste (42) eine Eingriffsschräge (43) liegt.

4. Befestigungselement nach einem der Ansprüche 2 oder 3, **dadurch gekennzeichnet, dass** die Raste (42) am Ende einer Zunge (44) liegt.

5. Befestigungselement nach einem der Ansprüche 2 bis 4, **dadurch gekennzeichnet, dass** die Raste (42) sich entlang zumindest eines Teils einer der Seiten einer Öffnung (45) erstreckt.

6. Befestigungselement nach einem der Ansprüche 1 bis 5, **dadurch gekennzeichnet, dass** jede Öffnung (45) des Geräteträgers (24) ihn vollständig quert.

7. Befestigungselement nach einem der Ansprüche 1 bis 6, **dadurch gekennzeichnet, dass** es eine Abdeckplatte (21) auf der der Platte (25) gegenüberliegenden Seite aufweist, und dass die Öffnung (45), welche der Geräteträger aufweist, geeignet ist, an der Verrastung einer solchen Abdeckplatte (21) mitzuwirken.

8. Befestigungselement nach Anspruch 7, **dadurch gekennzeichnet, dass** der Geräteträger (24) zum Verrasten der Abdeckplatte (21) eine andere Raste (48) aufweist, welche sich auf zumindest einem Teil der Seite der Öffnung (45) erstreckt, welche gegenüber der Seite liegt, entlang derer sich die Raste (42) erstreckt, welche die Verrastmittel (33) bildet.

9. Befestigungselement nach einem der Ansprüche 1 bis 8, **dadurch gekennzeichnet, dass** die Verrastmittel (32) von jeder der Säulen (31) der Platte (25) eine Raste (55) aufweisen, und dass diese oberhalb eines Absatzes (57) liegt, auf dem der Geräteträger (24) sich abstützen kann.

10. Befestigungselement nach Anspruch 9, **dadurch gekennzeichnet, dass** der Abstand (D) zwischen der Raste (55) der Säulen (31) der Platte (25) und dem zu dieser Raste (55) gehörenden Absatz (57) im Wesentlichen gleich der Dicke (E) jedes Randstreifens (28) des Geräteträgers (24) ist, wobei er geringfügig größer als diese Dicke (E) ist.

11. Befestigungselement nach einem der Ansprüche 9 oder 10, **dadurch gekennzeichnet, dass** vor der Raste (55) eine Eingriffsschräge (56) liegt.

12. Befestigungselement nach einem der Ansprüche 1 bis 11, **dadurch gekennzeichnet, dass** die Säulen (31) der Platte (25), obwohl sie vergleichsweise steif sind, jeweils ausreichend elastisch verformbar sind, um das Einrasten des Geräteträgers (24) auf ihnen zu erlauben.

13. Befestigungselement nach einem der Ansprüche 1 bis 12, **dadurch gekennzeichnet, dass** die Platte (25) vier vorspringende Säulen (31) trägt.

14. Befestigungselement nach Anspruch 13, **dadurch gekennzeichnet, dass** die Säulen (31) der Platte (25) auf einem Bruchteil ihrer Höhe von der Platte (25) aus gesehen untereinander paarweise über eine Wand (60) verbunden sind.

15. Befestigungselement nach einem der Ansprüche 1 bis 14, **dadurch gekennzeichnet, dass** die Platte (25) ein Montagehilfsstück ist, welches Befestigungsmittel umfasst, welche zu seiner Befestigung an einer beliebigen Unterlage geeignet sind.

16. Gehäuse, **dadurch gekennzeichnet, dass** in seinem Inneren ein Befestigungselement nach einem der Ansprüche 1 bis 15 enthalten ist.
